Europäisches Patentamt

European Patent Office

Office européen des brevets

(19)

(11) EP 1 086 987 A1

(12) EUROPEAN PATENT APPLICATION

(43) Date of publication:
28.03.2001 Bulletin 2001/13

(51) Int Cl.7: C08L 27/02

(21) Application number: 00308467.0

(22) Date of filing: 27.09.2000

(84) Designated Contracting States:
AT BE CH CY DE DK ES FI FR GB GR IE IT LI LU
MC NL PT SE
Designated Extension States:
AL LT LV MK RO SI

(30) Priority: 27.09.1999 JP 27154999

(71) Applicant: DuPont-Mitsui Fluorochemicals Co.,
Ltd.
Chiyoda-Ku, Tokyo (JP)

(72) Inventors:
• Lee, Jeong Chang
Shimizu City, Shizuoka Prefecture (JP)
• Kondo, Shosaku
Shimizu City, Shizuoka Prefecture (JP)
• Sato, Hajime
Shimizu City, Shizuoka Prefecture (JP)

(74) Representative: Matthews, Derek Peter
Frank B. Dehn & Co.,
European Patent Attorneys,
179 Queen Victoria Street
London EC4V 4EL (GB)

(54) Method of fabricating composite fluoroplastic articles

(57) A method of fabricating composite fluoroplastic articles, the method comprising the steps of melting and blending together a melt-processible fluoropolymer and a liquid-crystal polymer having a melting point at least 20°C higher than that of the fluoropolymer, orienting the blend so as to form molding particles comprised of the liquid-crystal polymer dispersed in a fibrous form within a fluoropolymer matrix, then melt processing the particles at a temperature of at least the melting point of the fluoropolymer but not above the melting point of the liquid-crystal polymer. Composite articles manufactured by the method have good moldability, low linear expansion coefficient and molding shrinkage, and excellent strength and deflection temperature.

**Description**

**FIELD OF THE INVENTION**

This invention relates to the melt-fabrication of blends of fluoropolymers and liquid crystal polymers.

**BACKGROUND OF THE INVENTION**

Because fluoropolymers have a larger linear expansion coefficient than metals and a large shrinkage after molding, when they are used together with metals such as aluminum alloys in the automotive industry, for example, temperature changes give rise to differential expansion and shrinkage, which causes stress in the fabricated parts. Moreover, rises in the service temperatures required of materials in recent years has increased the need for improved heat resistance. In spite of this, the deflection temperature of fluoroplastics remains at an unsatisfactory level.

One approach commonly taken in engineering plastics to overcome such problems is to increase the strength of the polymer by filling it with glass or carbon fibers. However, incorporation of glass or carbon fibers increases melt viscosity, making the polymer more difficult to process.

Another approach that has been recently proposed involves the preparation of an *in situ* composite of liquid-crystal polymer in a polymer matrix. During extrusion, the liquid-crystal polymer becomes oriented in a fibrous form within the polymer matrix, thereby enhancing the matrix strength (see *Journal of Macromolecular Science, Chemical Physics* **1995**, C35, p. 183; and Japanese Patent A 2-32147). This method offers a number of advantages over conventional glass fiber- or carbon fiber-reinforced polymers. For example, liquid-crystal polymer lowers the melt viscosity of the matrix polymer and simplifies the processing steps. It is necessary however, in using this method, that sufficient shear be applied at the shaping stage to cause fibrous deformation of the liquid-crystal polymer. In fabricated articles of non-uniform cross-section or complex shape, it is difficult to uniformly fiberize the liquid-crystal polymer throughout the article because shear is not uniform at all points. In the case of injection molding in particular, although the liquid-crystal polymer does fiberize to a certain degree at the mold-contacting surfaces, where shear is highest, in the interior of the molded article there may be little or no fiber formation. This give the article a "skin-core" character in which much of the liquid-crystal polymer remains unfiberized, and therefore does not contribute to the strength and dimensional stability of the article.

A method is needed to improve the degree of fiberization of liquid-crystal polymer in polymer matrices.

**SUMMARY OF THE INVENTION**

The invention provides a method of fabricating composite fluoroplastic articles, the method comprising the steps of:

(a) melting and blending together a melt-processible fluoropolymer and a liquid-crystal polymer to form a blend, said liquid-crystal polymer having a melting point at least about 20°C higher than that of the fluoropolymer,
(b) orienting the blend so as to form molding particles comprised of the liquid-crystal polymer dispersed in a fibrous form within a fluoropolymer matrix, and then
(c) melt processing the particles at a temperature of at least the melting point of the fluoropolymer but not above the melting point of the liquid-crystal polymer.

In the method according to this invention, the fibrous form of the liquid-crystal polymer is preserved during fabrication of the fluoropolymer article, thereby helping to strengthen the physical properties of the article. Furthermore, the melt viscosity can be reduced to a value lower than that of the fluoropolymer alone. The inventors thus found the processibility in the final fabrication step to be excellent. The invention provides a new method of fabricating liquid-crystal polymer-reinforced fluoroplastic articles which have good processibility and can be adapted to various shapes. The invention also provides a method of fabricating liquid-crystal polymer-reinforced fluoroplastic articles having a low linear expansion coefficient, low molding shrinkage, a high deflection temperature and improved mechanical strength.

**DETAILED DESCRIPTION**

Illustrative examples of melt-processible fluoropolymer used according to the invention include copolymers of tetrafluoroethylene and perfluoro(alkyl vinyl ether) (PFA), of tetrafluoroethylene and hexafluoropropylene (FEP), of tetrafluoroethylene and ethylene (ETFE), and polyvinylidene fluoride (PVDF) and polychlorotrifluoroethylene (PCTFE).

The liquid-crystal polymer used according to the invention is a thermoplastic polymer which forms thermotropic liquid crystals and has a melting point at least about 20°C higher, and preferably from about 30°C to about 80°C higher, than that of the fluoropolymer. With a liquid-crystal polymer having a melting point less than about 20°C above that of the fluoropolymer, it is difficult to maintain the liquid-crystal polymer in a fibrous form during fabrication of articles from the molded particles, as a result of which composite fabricated articles having a satisfactory performance are not readily obtained. Examples of such liquid-crystal polymers include polyesters, polyesteramides, polyesterimides and polyesterurethanes. Of these, polyesters are especially preferred. Typical liquid-crystal polyesters include wholly aromatic polyesters, of which many types are known. Suitable examples include those derived from aromatic dicarboxylic acids and aromatic dihydroxy compounds and/or aromatic hydroxycarboxylic acids. A portion of the polyester may be substituted with polymeric units derived from, for example, aliphatic dicarboxylic acids, aliphatic dihydroxy compounds or aliphatic hydroxycarboxylic acids. Specific examples include polyesters having polymeric units derived from aromatic dicarboxylic acids such as terephthalic acid, isophthalic acid and 2,6-naphthalenedicarboxylic acid, aromatic dihydroxy compounds such as hydroquinone, resorcinol, 2,6-dihydroxynaphthalene, bisphenol A and dihydroxydiphenyl; or aromatic hydroxycarboxylic acids such as p-hydroxybenzoic acid.

In the method according to this invention, first the fluoropolymer and the liquid-crystal polymer are melted and blended together, following which the blend is oriented to produce molding particles that are comprised of the liquid-crystal polymer dispersed in a fibrous form within the fluoropolymer matrix. Advantageously, the blending ratio of the fluoropolymer and the liquid-crystal polymer is adjusted so that the amount of liquid-crystal polymer is from about 5% to about 60% by weight, and especially about 10% to about 30% by weight. Too little liquid-crystal polymer may fail to provide a reinforcing effect, whereas too much liquid-crystal polymer may result in the fiberized liquid-crystal polymer having an excessive diameter, or may make the fluoropolymer the discontinuous phase.

In order to form small-diameter liquid-crystal polymer fibers, it is desirable that the orientation temperature preferably be at least the melting point of the liquid-crystal polymer, and more preferably be from about 10°C to about 20°C higher than the melting point. The ratio of the melt viscosity of the liquid-crystal polymer to the melt viscosity of the fluoropolymer at the orientation temperature should be within a range of about 0.1 to about 1, and preferably within a range of about 0.4 to about 0.8. Temperature should be closely controlled during orientation. In orienting a molten blend of fluoropolymer and liquid-crystal polymer having a melt viscosity range as indicated above, the liquid-crystal polymer undergoes deformation in concert with deformation of the matrix polymer, thereby assuming fibrous form.

The diameter of the fiberized liquid-crystal polymer in the fluoropolymer matrix can be controlled by means of the draw ratio applied to the molten blend during the orientation step. To fully achieve the effects of modification by the liquid-crystal polymer, it is advantageous to adjust the fiber diameter of the liquid-crystal polymer to be not more than about 30 μm, and preferably within a range of about 1 to about 10 μm, and to set the aspect ratio of the fibers, that is the length divided by the diameter, to be at least about 50, and preferably at least about 100. This is advantageously achieved by setting the draw ratio at about 3 or more, and most preferably within a range of about 5 to about 10.

For ease of operation in subsequent processing and to assure that the liquid-crystal polymer maintains some degree of fiber length and has a strength sufficient for the fabricated article, the particles of the blend should not be too fine. For example, particles obtained in the form of pellets or chips having a size of about 1 mm to about 5 mm are desirable. Accordingly, it is advantageous to carry out orientation of the molten blend by extruding the blend in the form of a strand. The resulting oriented material can then be chopped into pellet- or chip-like particles. Orientation may be carried out by making the take-off speed of the strand higher than the extrusion speed. The draw ratio can be expressed as either the ratio of the take-off speed to the extrusion speed or the ratio of the area of the orifice of the extrusion die to the cross-sectional area of the extruded strand.

When the above particles are produced, other polymers and additives may be incorporated insofar as the objects of the invention are attainable. For example, a compatibilizing agent may be included to enhance adhesion at the interface between the liquid-crystal polymer and the fluoropolymer or to uniformly disperse the fibrous liquid-crystal polymer within the fluoropolymer matrix. The amount of compatibilizing agent incorporated should preferably be no more than about 10% by weight so as not to compromise the properties of the composite fluoroplastic article. Various additives may also be included in the blend. Suitable examples include inorganic substances such as antioxidants, light stabilizers, antistatic agents, fluorescent brighteners, colorants, and carbon black.

The above-described particles obtained by orientation can then be processed by any fabrication technique suitable for achieving the shape of the desired article. Examples of suitable fabrication techniques include injection molding, extrusion, compression molding, blow molding, rotational molding, and transfer molding. The processing temperature, which is chosen to strike a balance between the processibility of the fluoropolymer and the physical properties of the article to be obtained, is not less than the melting point of the fluoropolymer and not more than the melting point of the liquid-crystal polymer, and preferably within a range from about 10°C above the melting point of the fluoropolymer to about 5°C to about 30°C below the melting point of the liquid-crystal polymer. If the processing temperature is higher than the melting point of the liquid-crystal polymer, the liquid-crystal polymer that has been dispersed in a fibrous form melts and ceases to exhibit a fibrous structure.

## EXAMPLES

Test Methods

The morphology and size of the liquid-crystal polymer in the fluoropolymer matrix was determined by cooling the specimen in liquid nitrogen, fracturing the specimen, and observing the fractured surface by scanning electron microscopy (SEM) using a Hitachi S-4500 scanning electron microscope.

Melt viscosity was measured with a Toyoseiki "Capirograph 1B" capillary rheometer at a temperature 345°C and a shear rate of 91.2 sec$^{-1}$. The capillary die had a orifice 1 mm in diameter. The length-to-diameter ratio of the capillary was 20.

Tensile strength and elongation were measured according to the method of ASTM D-696. Tensile modulus of elasticity was determined from the linear portion of the stress-strain curve obtained in the tensile measurement.

Coefficient of linear thermal expansion was measured in accordance with ASTM D-969.

**Production of Oriented Strand for Molding**

A fluoropolymer (PF004, a PFA produced by DuPont-Mitsui Fluorochemicals Co., Ltd.; melting point, 304°C) and a liquid-crystal polymer (Zenite 7000, produced by E.I. du Pont de Nemours & Co., Inc.; melting point, 353°C) were thoroughly dried, then fed in the proportions shown in Table 1 to a 30 mm extruder. A strand-like shape was extruded (polymer temperature, 365°C; diameter of extrusion die orifice, 3 mm), and the extruded shape was oriented by varying the take-off speed by a take-off apparatus, thereby giving a strand having a draw ratio of 5. The physical properties of the strand were measured. The results are summarized in Table 1. The draw ratio was calculated as follows:

$$\text{Draw Ratio} = \frac{\text{cross-sectional area of extrusion die orifice}}{\text{cross-sectional area of extruded strand}}$$

Scanning electron microscopic (SEM) examination of the resulting oriented strands showed that at a draw ratio of 5, most of the liquid-crystal polymer had assumed a fibrous structure with a diameter of 3 μm to 10 μm and an aspect ratio of 100 or greater.

**Example 1**

Pellets about 3 mm in length were produced with a pelletizer from the oriented strand made as described above. The resulting pellets were fed to an injection molding machine and test pieces were injection-molded (mold temperature, 200°C, injection speed, 20 cc/sec) while controlling the cylinder temperature at 345°C, about 8°C below the melting point of the liquid-crystal polymer, so as to keep the liquid-crystal polymer from melting. The resulting test pieces (12 mm × 125 mm × 2 mm) were subjected to tensile testing, in addition to which the linear expansion coefficient in the direction of flow was measured. Moreover, the form and size of the liquid-crystal phase within the PFA matrix were measured using an electron microscope. The results obtained are summarized in Table 1.

**Comparative Example A**

Example 1 was repeated but with the cylinder temperature about 8°C higher than the melting point of the liquid-crystal polymer. The physical properties of the test pieces were measured. The results are summarized in Table 1. Because the cylinder temperature was higher than the melting point of the liquid-crystal polymer, the liquid-crystal polymer that had been rendered fibrous in the orientation step, melted in the injection molding step and became spheroidal.

**Comparative Example B**

Test specimens were injection molded as in Example 1, except that PFA pellets were fed directly to the injection molding machine without using any liquid-crystal polymer. The physical properties were measured by the same method as in Example 1. The results are summarized in Table 1.

Table 1

|  |  | Strand | Ex. 1 | Comp. Ex. A | Comp. Ex. B |
|---|---|---|---|---|---|
| Starting materials | PFA(wt%) | 90 | 90 | 90 | 100 |
|  | Liquid-crystal polymer (wt %) | 10 | 10 | 10 | 0 |
| Draw ratio of strand | | 5 | 5 | 5 | -- |
| Injection molding temperature (°C) | | -- | 345 | 365 | 345 |
| Form of liquid-crystal polymer after fabrication | | fibrous | fibrous | spheroidal | -- |
| Diameter of liquid-crystal polymer fibers (µm) | | 3 to 10 | 3 to 10 | -- | -- |
| Aspect ratio of liquid-crystal fibers | | ca. 100 | ca. 100[a] | -- | -- |
| Melt viscosity at 345°C (poise) (Pa·s) | | 3750 / 375 | 3750 / 375 | 3750 / 375 | 12600 / 1260 |
| Tensile strength (kgf/cm$^2$) (MPa) | | 250 / 24.5 | 190 / 18.6 | 150 / 14.7 | 160 / 15.7 |
| Elongation (%) | | 15 | 33 | 43 | 510 |
| Tensile modulus (kgf/cm$^2$) (MPa) | | 9200 / 902 | 4200 / 412 | 2020 / 198 | 1740 / 171 |
| Linear expansion coefficient ($\times$ 10$^{-5}$, °C$^{-1}$) | | 2.1 | 2.5 | 6.6 | 14 |

[a] Though about the same, the average aspect ratio of the fibers in the test pieces of Example 1 is somewhat less than that of the oriented strand, presumably because of fiber breakage during injection molding.

As is apparent from Table 1, when a strand is first produced under orientation so as to have the liquid-crystal polymer present in fibrous form in the fluoropolymer matrix, and then pellets obtained from the strand are molded at a temperature below the melting point of the liquid-crystal polymer (345°C in Example 1), the liquid-crystal polymer dispersed in fibrous form within the fluoropolymer remains in fibrous form throughout the molded article after molding has been completed. Moreover, the composite fluoroplastic articles of the invention in which liquid-crystal polymer remains present in fibrous form after the final molding step have better strength than molded articles made of pure PFA, and the linear expansion coefficient decreases to substantially the same level as that of aluminum alloys. In addition, due to sliding between the rigid liquid-crystal polymer molecules, the melt viscosity of the blend is lower than that of pure PFA even at temperatures about 10°C lower than the melting point of the liquid-crystal polymer, resulting in enhanced moldability.

In the method according to this invention, final molding is carried out after first fiberizing the liquid-crystal polymer in the fluoropolymer matrix, and so the liquid-crystal polymer does not have to be fiberized during the molding process. This method can be applied to a broad range of applications for injection-molded or compression-molded articles having a variety of constructions and forms. Moreover, because the fibrous liquid-crystal polymer is present in a uniformly dispersed form throughout the final molded article, a fluoroplastic composite body having a high strength, high elasticity and good chemical resistance is obtained. By increasing the draw ratio in particular, there can be formed a composite containing as the reinforcement a liquid-crystal polymer in a very long, slender fibrous form. This composite can be employed in such applications as pipe, tubing, film, linings, fibers, and filters. Because the inventive method also provides the composite with a low molding shrinkage or a low linear expansion coefficient similar to that of aluminum alloys, the composite may also be used as a sliding material in automotive applications.

## Claims

1.    A method of fabricating composite fluoroplastic articles, the method comprising the steps of:

(a) melting and blending together a melt-processible fluoropolymer and a liquid-crystal polymer to form a blend, said liquid-crystal polymer having a melting point at least about 20°C higher than that of the fluoropolymer,
(b) orienting the blend so as to form molding particles comprised of the liquid-crystal polymer dispersed in a fibrous form within a fluoropolymer matrix, and then
(c) melt processing the particles at a temperature of at least the melting point of the fluoropolymer but not above the melting point of the liquid-crystal polymer.

2. The fabrication method of claim 1, wherein the molding particles have been formed by orientation at a draw ratio of at least about 3, and the liquid-crystal polymer in the fluoropolymer matrix has a fiber diameter of not more than about 30 μm.

3. The fabrication method of claim 1, wherein the liquid-crystal polymer is a liquid-crystal polyester.

4. The fabrication method of claim 2, wherein the draw ratio is within a range of about 5 to about 10.

**EP 1 086 987 A1**

<table>
<tr><td>**European Patent Office**</td><td>**EUROPEAN SEARCH REPORT**</td><td>Application Number<br>EP 00 30 8467</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | DATABASE WPI<br>Derwent Publications Ltd., London, GB;<br>AN 1990-079260<br>XP002156803<br>& JP 02 032147 A (TORAY),<br>1 February 1990 (1990-02-01) | 1 | $C08L27/02$ |
| Y | * abstract * | 1-4 | |
| Y | US 5 260 380 A (ISAYEV AVRAAM)<br>9 November 1993 (1993-11-09)<br>* column 7, line 49 - line 61 *<br>* column 7, line 28FF *<br>* column 6, line 67 - column 7, line 2 * | 1-4 | |
| A | EP 0 709 428 A (DAIKIN IND LTD)<br>1 May 1996 (1996-05-01)<br>* examples 1-3 * | 1-4 | |
| A | WO 95 04782 A (NESTE OY ;SUOKAS ESA (FI);<br>AALTO TAINA (FI); BERGSTROEM CHRISTER ())<br>16 February 1995 (1995-02-16)<br>* example 1 * | 1-4 | TECHNICAL FIELDS SEARCHED (Int.Cl.7)<br>$C08L$<br>$C08J$ |
| A | US 5 225 488 A (BAIRD DONALD G ET AL)<br>6 July 1993 (1993-07-06)<br>* column 5, line 5 - column 6, line 27; example 1 * | 1-4 | |

The present search report has been drawn up for all claims

| Place of search | Date of completion of the search | Examiner |
|---|---|---|
| THE HAGUE | 9 January 2001 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 30 8467

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2001

| Patent document cited in search report | | Publication date | Patent family member(s) | | Publication date |
|---|---|---|---|---|---|
| JP 2032147 | A | 01-02-1990 | NONE | | |
| US 5260380 | A | 09-11-1993 | AU | 661123 B | 13-07-1995 |
| | | | AU | 3592793 A | 01-09-1993 |
| | | | CA | 2128613 A | 05-08-1993 |
| | | | EP | 0623156 A | 09-11-1994 |
| | | | JP | 7509503 T | 19-10-1995 |
| | | | WO | 9315144 A | 05-08-1993 |
| EP 0709428 | A | 01-05-1996 | DE | 69510637 D | 12-08-1999 |
| | | | DE | 69510637 T | 02-12-1999 |
| | | | US | 5767198 A | 16-06-1998 |
| | | | CA | 2166060 A | 09-11-1995 |
| | | | CN | 1127515 A | 24-07-1996 |
| | | | WO | 9529956 A | 09-11-1995 |
| WO 9504782 | A | 16-02-1995 | FI | 933516 A | 11-02-1995 |
| US 5225488 | A | 06-07-1993 | WO | 9219676 A | 12-11-1992 |

EPO FORM P0459

For more details about this annex : see Official Journal of the European Patent Office, No. 12/82